# EUROPEAN PATENT SPECIFICATION

(11) **EP 3 421 477 B1**
(45) Date of publication and mention of the grant of the patent: **23.12.2020**
(21) Application number: 17756110.7
(22) Date of filing: 31.01.2017
(51) Int. Cl.: C07F 7/10, C08F 30/08, C08F 299/08, C08G 77/388, C08L 83/08, C08G 77/382, C08G 77/455, C08G 77/38

(54) **ORGANOPOLYSILOXANE AND PRODUCTION METHOD THEREFOR, AND CURABLE COMPOSITION**
ORGANOPOLYSILOXAN UND HERSTELLUNGSVERFAHREN DAFÜR SOWIE HÄRTBARE ZUSAMMENSETZUNG
ORGANOPOLYSILOXANE ET PROCÉDÉ DE FABRICATION ASSOCIÉ, ET COMPOSITION DURCISSABLE

(30) Priority: 25.02.2016 JP 2016034504; 25.02.2016 JP 2016034535
(43) Date of publication of application: 02.01.2019
(73) Proprietor: Shin-Etsu Chemical Co., Ltd., Tokyo 100-0004 (JP)
(72) Inventor: TSUCHIDA, Osamu, Annaka-shi Gunma 379-0224 (JP)
(74) Representative: Mewburn Ellis LLP
(86) International application number: PCT/JP2017/003405
(87) International publication number: WO 2017/145668

(56) References cited:
- GB-A- 1 522 228
- GB-A- 2 109 390
- JP-A- H1 171 347
- JP-A- S5 869 229
- JP-A- H09 309 876
- JP-A- S51 125 277
- JP-A- 2007 031 321
- JP-A- 2013 046 003
- JP-A- 2013 166 908
- US-A- 4 075 167

## Description

### TECHNICAL FIELD

The present invention relates to a method for preparing an organopolysiloxane, particularly an organopolysiloxane having excellent heat resistance.

### BACKGROUND ART

Organopolysiloxanes are organic-inorganic composite polymers which have siloxane bonds on the main chain and organic groups on the side chains. These materials have excellent characteristics such as heat resistance, weatherability, slideability, chemical resistance and electrically insulating properties, and exist in the form, for example, oils, rubbers and resins. Organopolysiloxane oils, which are also called silicone oils, have a higher heat resistance and weatherability than other organic oils, in addition to which another characteristic is their distinctively smooth, dry feel to the touch. Because of their excellent heat resistance, they are used as, for example, industrial heat transfer media.

A variety of organic groups are used in silicone oils. Examples of non-reactive organic groups include alkyl groups, phenyl groups, polyether groups, fluoroalkyl groups and perfluoropolyether groups. Examples of reactive organic groups include vinyl groups, epoxy groups, amino groups, hydroxyl groups, mercapto groups and carboxyl groups. Each type of silicone oil is used selectively according to the intended application.

Also, imide is the generic term for compounds of the general formula R^{a}-CO-NR^{b}-CO-R^{c} (wherein R^{a}, R^{b} and R^{c} represent organic groups) containing nitrogen and having two C=O linkages that are obtained by reacting a primary amine with a carboxylic acid anhydride. This structure is chemically important and is used in all fields of industry, including pharmaceutical and pesticide intermediates, paints and organic resins. Commonly known imides include polyimide resins, which are polymers having consecutive imide structures. These have excellent properties, such as heat resistance, electrical insulating properties, chemical resistance and mechanical strength, and are known as one type of super-engineering plastic. With regard to heat resistance in particular, these materials exhibit the highest level of heat resistance of all resins.

By combining an imide with an organopolysiloxane, it is possible to produce an excellent material that possesses the features of each. For example, Patent Publications 1 to 4 (JP No. 4218282, JP-A 2004-263058, JP No. 5314856 and JP No. 4204435) describe siloxane-polyimide copolymers obtained using a diaminopolysiloxane as a starting material and show these to be industrially important materials having various features. However, because recurring imide structures are present, the product is a solid. Hence, a drawback is that, depending on the application, handling is difficult.

Composite materials of imides and organopolysiloxanes are not solvent dilutable and substantially none are liquid, the reason being that rigid imide structures are present on the polymer backbone. It is thought that by synthesizing an imide-modified organopolysiloxane in which the backbone consists solely of organopolysiloxane which is modified on side chains with organic groups having an imide structure, a liquid material having the features of both materials can be obtained. However, such a material does not yet exist.

Resins obtained by curing liquid resin compositions are widely utilized in a variety of fields. Curing proceeds via the formation of a crosslinked structure due to chemical bonds within the composition. The energy sources for such formation include heat and light.

There are a variety of types of thermoset resins, including urea resins, melamine resins, epoxy resins, phenolic resins, urethane resins and unsaturated polyester resins. The ingredients for these contain functional groups that form chemical bonds under the effect of heat, and thus cure under heating.

Photocurable resins are resins having functional groups that form a crosslinked structure under the effect of light. Typical functional groups include (meth)acrylic groups, mercapto groups and epoxy groups. (Meth)acrylic groups form crosslinks by radical-mediated polymerization reactions, and mercapto groups give rise to a radical-mediated ene-thiol reaction in the presence of alkenyl groups. Epoxy groups undergo cationic polymerization under the effect of an acid generated by light.

Photocurable resins are used in all areas of industry and have the advantage that they can be utilized even in environments where applying heat would pose a problem. Silicones are one type of resin having such photoreactive functional groups. Silicone is the generic term for organopolysiloxanes in which the backbone is made up of consecutive siloxane linkages and which has organic groups such as methyl groups on the side chains.

Photocurable silicones are starting materials for cured products such as silicone rubbers, silicones for release paper, and hardcoat-forming silicones. Silicones having the above-mentioned (meth)acrylic groups, mercapto groups and epoxy groups are widely known (e.g. JP-A H07-26146, JP-B H06-49764, JP-B H06-17447: Patent Documents 5 to 7), and have hitherto been put to practical use. These require the admixture of a radical polymerization initiator or a photoacid generator prior to light irradiation.

One photoreactive functional group that has attracted attention lately is the maleimide group. The maleimide group is a functional group having a carbon-carbon double bond conjugated with the two carbonyl groups of the imide. It has radical polymerizability, along with which it has the singular attribute that the double bond site dimerizes under the effect of light. Owing to the two mechanisms of radical polymerization and photodimerization, the reaction proceeds upon irradiation with light, even without the use of an initiator. By making use of this, it is possible, with a silicone having maleimide groups, to achieve a new one-part resin that requires no initiator. However, this remains substantially uninvestigated to date.

US 4075167 A discloses the reaction of amino-functional organosiloxanes with maleic anhydride and its derivatives to form maleimido-functional organosiloxanes which undergo subsequent cure by exposure to light in the absence of photosensitizers.

### PRIOR ART DOCUMENTS

### PATENT DOCUMENTS

Patent Document 1: JP 4218282
Patent Document 2: JP-A 2004-263058
Patent Document 3: JP 5314856
Patent Document 4: JP 4204435
Patent Document 5: JP-A H07-26146
Patent Document 6: JP-B H06-49764
Patent Document 7: JP-B H06-17447

### SUMMARY OF INVENTION

### TECHNICAL PROBLEM

It is therefore an object of the present invention to provide a method for preparing an imide-modified organopolysiloxane in liquid form that has excellent heat resistance.

### SOLUTION TO THE PROBLEM

Accordingly, this invention provides a method of preparation of an organopolysiloxane which has average compositional formula (1) below and includes at least one organic group with a structure of general formula (2) or (3) below per molecule 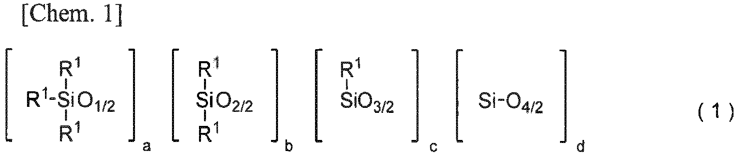 (wherein the R¹ moieties, which may be the same or different, are substituted or unsubstituted monovalent hydrocarbon groups of 1 to 10 carbon atoms or organic groups having a structure of general formula (2) or (3) below, at least one R¹ moiety including an organic group having a structure of general formula (2) or (3) below; and the subscript a is an integer of 2 or more, the subscript b is an integer of 0 or more, the subscript c is an integer of 0 or more, the subscript d is an integer of 0 or more, and 2 ≤ a+b+c+d ≤ 1,000) 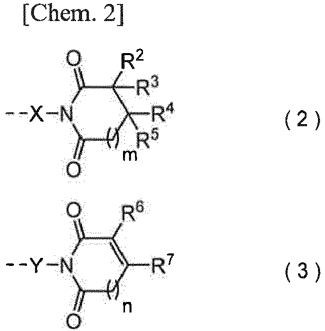 (wherein R² to R⁷, which may be mutually the same or different, are hydrogen atoms or substituted or unsubstituted monovalent hydrocarbon groups of 1 to 10 carbon atoms, and R² or R³ and R⁴ or R⁵, or R⁶ and R⁷, may bond together to form a ring; the subscripts m and n are integers from 0 to 3; X and Y are substituted or unsubstituted divalent hydrocarbon groups of 1 to 10 carbon atoms which may have an intervening heteroatom; and the dashed line represents a site available for bonding).

The method of preparation may lead to organopolysiloxanes of formula (1) wherein the subscript a is an integer from 2 to 12, the subscript b is an integer from 5 to 500, the subscript c is an integer from 0 to 10, the subscript d is an integer from 0 to 5, and the sum a+b+c+d is from 7 to 527.

The method for preparing the organopolysiloxane having formula (1) uses
(A) 100 parts by weight of an organopolysiloxane which has average compositional formula (4) below and includes at least one amino group-containing organic group of 1 to 10 carbon atoms per molecule 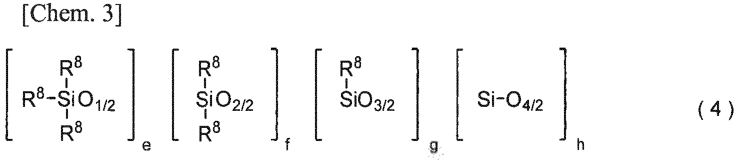 (wherein the R⁸ moieties, which may be the same or different, are substituted or unsubstituted monovalent hydrocarbon groups of 1 to 10 carbon atoms or amino group-containing organic groups of 1 to 10 carbon atoms, at least one R⁸ moiety including an amino group-containing organic group of 1 to 10 carbon atoms; and the subscript e is an integer of 2 or more, the subscript f is an integer of 0 or more, the subscript g is an integer of 0 or more, the subscript h is an integer of 0 or more, and 2 ≤ e+f+g+h ≤ 1,000),
(B) an organic compound of general formula (5) or (6) below in an amount corresponding to a molar ratio of from 1 to 3 with respect to the amino groups in component (A) 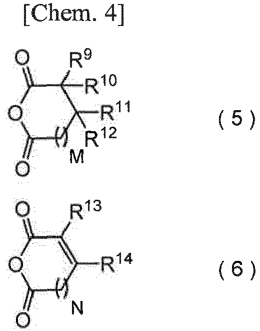 (wherein R⁹ to R¹⁴, which may be mutually the same or different, are hydrogen atoms or substituted or unsubstituted monovalent hydrocarbon groups of 1 to 10 carbon atoms, and R⁹ or R¹⁰ and R¹¹ or R¹², or R¹³ and R¹⁴, may bond together to form a ring; and M and N are integers from 0 to 3),
(C) a Lewis acid catalyst in an amount corresponding to a molar ratio of from 0.1 to 2 with respect to the amino groups in component (A),
(D) a silylating agent in an amount corresponding to a molar ratio of from 1 to 3 with respect to the amino groups in component (A), and
(E) an organic solvent in an amount of from 0 to 5,000 parts by weight per 100 parts by weight of component (A),
which method comprises the steps of:
reacting component (A) with component (B) in the presence of, optionally, component (E) to form an organopolysiloxane (F) of average compositional formula (7) below 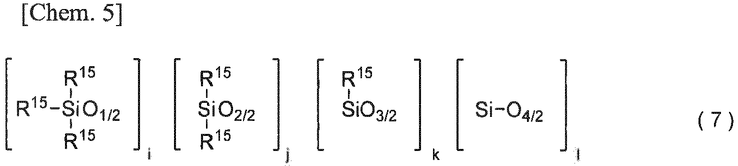 (wherein the R¹⁵ moieties, which may be the same or different, are substituted or unsubstituted monovalent hydrocarbon groups of 1 to 10 carbon atoms or organic groups having a structure of general formula (8) or (9) below, at least one R¹⁵ moiety including an organic group having a structure of general formula (8) or (9) below; and the subscript i is an integer of 2 or more, the subscript j is an integer of 0 or more, the subscript k is an integer of 0 or more, the subscript 1 is an integer of 0 or more, and 2 ≤ i+j+k+l ≤ 1,000) 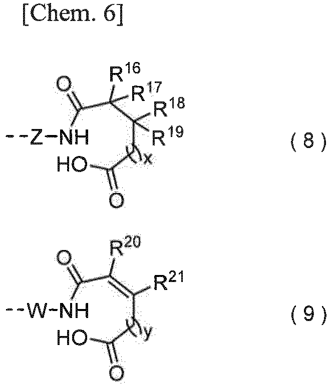 (wherein R¹⁶ to R²¹, which may be mutually the same or different, are hydrogen atoms or substituted or unsubstituted monovalent hydrocarbon groups of 1 to 10 carbon atoms, and R¹⁶ or R¹⁷ and R¹⁸ or R¹⁹, or R²⁰ and R²¹, may bond together to form a ring; the subscripts x and y are integers from 0 to 3; Z and W are substituted or unsubstituted divalent hydrocarbon groups of 1 to 10 carbon atoms which may have an intervening heteroatom; and the dashed line represents a site available for bonding); and
subsequently mixing in components (C) and (D) and effecting a condensation reaction between amide groups and carboxyl groups in component (F) then neutralizing the ammonia by reacting it with an acidic substance, and filtering off the resulting salt.

In the organopolysiloxane preparation method of the invention, in formula (1), the subscript a is an integer from 2 to 12, the subscript b is an integer from 5 to 500, the subscript c is an integer from 0 to 10, the subscript d is an integer from 0 to 5, and the sum a+b+c+d is from 7 to 527.

In the organopolysiloxane preparation method of the invention, component (A) may have an amine equivalent weight of from 200 to 5,000 g/mol.

In the organopolysiloxane preparation method of the invention, component (B) may be succinic anhydride, maleic anhydride, glutaric anhydride, adipic anhydride, pimelic anhydride or phthalic anhydride.

In the organopolysiloxane preparation method of the invention, compound (C) may be a metal compound. In the organopolysiloxane preparation method of the invention, compound (C) may be a zinc compound. In the organopolysiloxane preparation method of the invention, compound (D) may be a disilazane compound.

### ADVANTAGEOUS EFFECTS OF THE INVENTION

The invention relates to a novel method for the preparation of an organopolysiloxane. The organopolysiloxane is a liquid having an imide structure and can be used as a highly heat-resistant material. Also, the curable composition containing the organopolysiloxane can be cured by photoirradiation, particularly exposure to radiation, without requiring an initiator, and can be used in, for example, coating materials and rubber materials.

### DESCRIPTION OF EMBODIMENTS

The invention is described in detail below.

### Organopolysiloxane

The organopolysiloxane prepared by the method of the invention is modified with organic groups that include an imide structure, and has average compositional formula (1) below 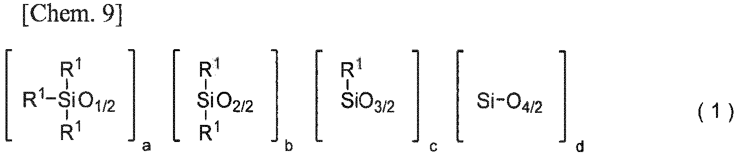 (wherein the R¹ moieties, which may be the same or different, are substituted or unsubstituted monovalent hydrocarbon groups of 1 to 10 carbon atoms or organic groups having a structure of general formula (2) or (3) below, at least one R¹ moiety including an organic group having a structure of general formula (2) or (3) below; and the subscript a is an integer of 2 or more, the subscript b is an integer of 0 or more, the subscript c is an integer of 0 or more, the subscript d is an integer of 0 or more, and 2 ≤ a+b+c+d ≤ 1,000) 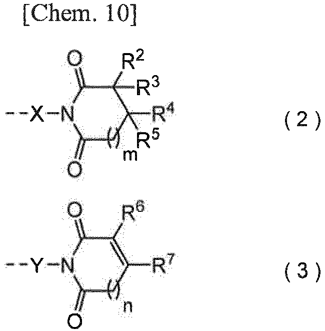 (wherein R² to R⁷, which may be mutually the same or different, are hydrogen atoms or substituted or unsubstituted monovalent hydrocarbon groups of 1 to 10 carbon atoms, and R² or R³ and R⁴ or R⁵, or R⁶ and R⁷, may bond together to form a ring; the subscripts m and n are integers from 0 to 3; X and Y are substituted or unsubstituted divalent hydrocarbon groups of 1 to 10 carbon atoms which may have an intervening heteroatom; and the dashed line represents a site available for bonding).

In above formula (1), the R¹ moieties, which may be the same or different, include substituted or unsubstituted monovalent hydrocarbon groups of 1 to 10 carbon atoms or organic groups having a structure of above general formula (2) or (3), at least one R¹ moiety including an organic group having a structure of general formula (2) or (3) above. Examples of monovalent hydrocarbon groups include alkyl groups such as methyl, ethyl, propyl and butyl groups, cycloalkyl groups such as the cyclohexyl group, and aryl groups such as the phenyl group. In addition, some or all of the hydrogen atoms bonded to carbon atoms on these groups may be substituted with halogen atoms or other groups. Exemplary substituents are trifluoromethyl and 3,3,3-trifluoropropyl groups. Of these, a saturated aliphatic group or an aromatic group is preferred, with methyl and phenyl groups being more preferred.

In this invention, at least one, preferably from 2 to 200, and more preferably from 2 to 150, of the R¹ moieties include an organic group having a structure of general formula (2) or (3).

In above formulas (2) and (3), R² to R⁷, which may be mutually the same or different, are hydrogen atoms or substituted or unsubstituted monovalent hydrocarbon groups of 1 to 10 carbon atoms. Exemplary monovalent hydrocarbon groups include alkyl groups such as methyl, ethyl, propyl and butyl groups, cycloalkyl groups such as the cyclohexyl group, and aryl groups such as the phenyl group. In addition, some or all of the hydrogen atoms bonded to carbon atoms on these groups may be substituted with halogen atoms or other groups. Exemplary substituents include trifluoromethyl and 3,3,3-trifluoropropyl groups. Hydrogen atoms and methyl groups are preferred. R² or R³ and R⁴ or R⁵, or R⁶ and R⁷, may bond together to form a ring. The ring is exemplified by a cyclopropane ring, a cyclobutane ring, a cyclopentane ring, a cyclohexane ring and a benzene ring. A benzene ring is preferred.

The subscripts m and n are each integers from 0 to 3, preferably integers from 0 to 2, and more preferably 0 or 1.

X and Y are each substituted or unsubstituted divalent hydrocarbon groups of 1 to 10 carbon atoms which may have an intervening heteroatom. Examples include alkylene groups such as CH₂, C₂H₄, C₃H₆, C₄H₈, C₅H₁₀ and C₆H₁₂ which may have an intervening ether group or thioether group. Alternatively, a cyclic structure such as a phenylene or cyclohexylene group may be formed. Some or all of the hydrogen atoms bonded to carbon atoms may be substituted with halogen atoms or other groups.

Exemplary structures of general formula (2) or (3) include, but are not limited to, those shown below. 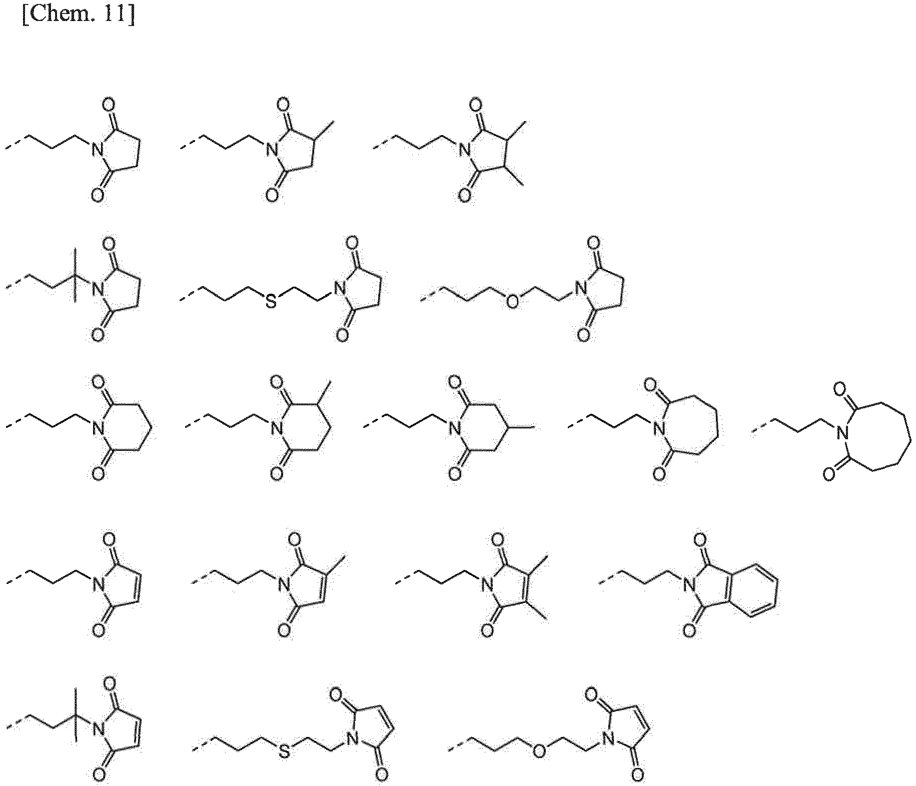 In these formulas, the dashed line indicates a site available for bonding.

In above formula (1), the subscript a is an integer of 2 or more, preferably from 2 to 12; the subscript b is an integer of 0 or more, preferably from 1 to 998, more preferably from 5 to 998, and even more preferably from 5 to 500; the subscript c is an integer of 0 or more, and preferably from 0 to 10; the integer d is an integer of 0 or more, and preferably from 0 to 5; and 2 ≤ a+b+c+d ≤ 1,000, preferably 7 ≤ a+b+c+d ≤ 527. When the sum a+b+c+d is larger than 1,000, the viscosity may be high and the workability may worsen.

Exemplary structures of the organopolysiloxane represented by formula (1) include, but are not limited to, those of the formulas shown below. In the following formulas, "Me" and "Ph" stand for, respectively, a methyl group and a phenyl group, and "I" stands for an N-succinimidopropyl group or an N-maleimidopropyl group. Any organic group having a structure of formula (2) or (3) is acceptable. 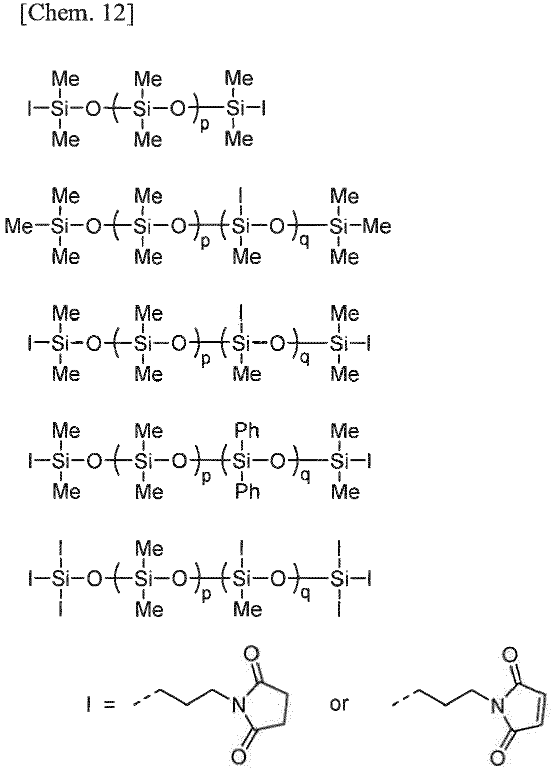 Here, p ≥ 0, q ≥ 1, and a dashed line indicates a site available for bonding. 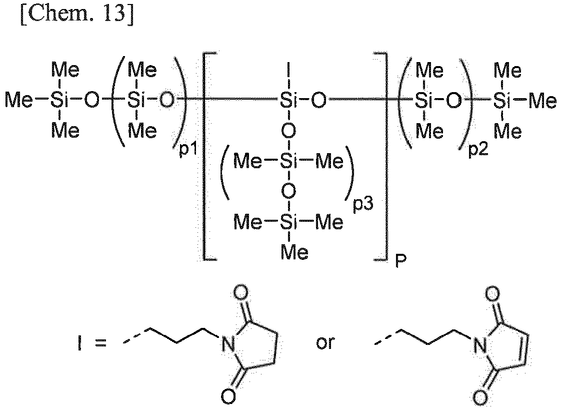 Here, p1 ≥ 0, p2 ≥ 0, p3 ≥ 0, P ≥ 1, and a dashed line indicates a site available for bonding.

### Method of Preparing Organopolysiloxane

The method of preparation of organopolysiloxanes in accordance with the invention involves addition reacting (A) an organopolysiloxane of average compositional formula (4) below and having at least one amino group-containing organic group on the molecule with (B) an organic compound of general formula (5) or (6) below in the optional presence of (E) an organic solvent, and additionally mixing in (C) a Lewis acid catalyst and (D) a silylating agent and effecting a condensation reaction (imidization reaction).

Details on the ingredients serving as the starting materials for the organopolysiloxane of the invention and on the method of preparation are given below.

### Component (A)

Component (A) is an organopolysiloxane which has the following average compositional formula (4) and includes at least one amino group-containing organic group per molecule 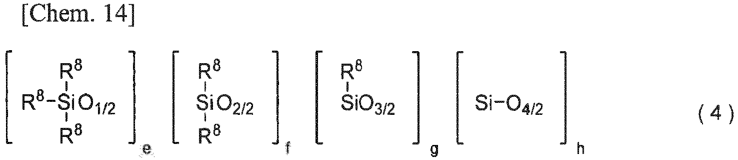 (wherein the R⁸ moieties, which may be the same or different, are substituted or unsubstituted monovalent hydrocarbon groups of 1 to 10 carbon atoms or amino group-containing organic groups of 1 to 10 carbon atoms, at least one R⁸ moiety including an amino group-containing organic group of 1 to 10 carbon atoms; and the subscript e is an integer of 2 or more, the subscript f is an integer of 0 or more, the subscript g is an integer of 0 or more, the subscript h is an integer of 0 or more, and 2 ≤ e+f+g+h ≤ 1,000).

In formula (4), the R⁸ moieties, which may be the same or different, are substituted or unsubstituted monovalent hydrocarbon groups of 1 to 10 carbon atoms or amino group-containing organic groups of 1 to 10 carbon atoms. At least one R⁸ moiety, and preferably from 2 to 200, includes an amino group-containing organic group. Examples of monovalent hydrocarbon groups include alkyl groups such as methyl, ethyl, propyl and butyl groups, cycloalkyl groups such as the cyclohexyl group, and aryl groups such as the phenyl group. In addition, some or all of the hydrogen atoms bonded to carbon atoms on these groups may be substituted with halogen atoms or other groups. Exemplary substituents include trifluromethyl and 3,3,3-trifluoropropyl groups. Of these, a saturated aliphatic group or an aromatic group is preferred, with method and phenyl groups being more preferred.

The amino group in the amino group-containing organic group is preferably a primary amine. The amino group-containing organic group is preferably, for example, an aminoalkyl group of 1 to 10 carbon atoms which may have an intervening ether group or thioether group, with an aminopropyl group being especially preferred. Specific amino group-containing organic group structures are shown below, but the amino group-containing organic group is not limited to these. 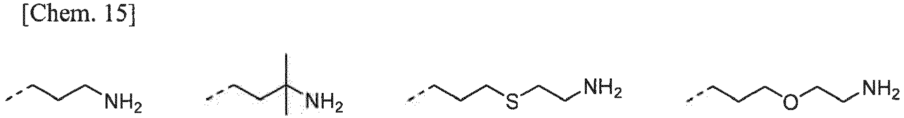 In the formulas, a dashed line indicates a site available for bonding.

The amine equivalent weight of component (A) is preferably from 200 to 5,000 g/mol, more preferably from 300 to 4,800 g/mol, and even more preferably from 400 to 4,500 g/mol. When the equivalent weight is lower than 200 g/mol, the heat resistance may decline due to the lower molecular weight of the product. When higher than 5,000 g/mol, the heat resistance may decline due to the smaller number of functional groups introduced.

In formula (4), the subscript e is an integer which is 2 or more, and preferably from 2 to 12; the subscript f is an integer which is 0 or more, preferably from 1 to 998, more preferably from 5 to 998, and even more preferably from 5 to 500; the subscript g is an integer which is 0 or more, and preferably from 0 to 10; and the subscript h is an integer which is 0 or more, and preferably from 0 to 5. Also, 2 ≤ e+f+g+h ≤ 1,000, and preferably 7 ≤ e+f+g+h ≤ 527. When the sum e+f+g+h is larger than 1,000, the viscosity may become high and the workability may worsen.

The specific structure of component (A) is exemplified by, but not limited to, those of the following formulas. In the formulas below, "Me" and "Ph" respectively stand for methyl and phenyl groups. Also, "A" stands for an aminopropyl group, although this may be any amino group-containing organic group of 1 to 10 carbon atoms. 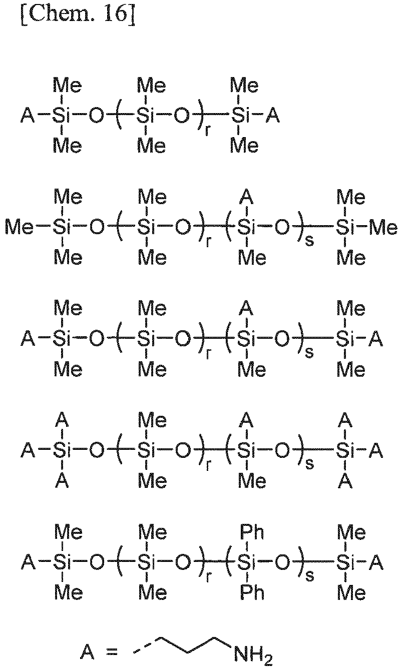 Here, r ≥ 0, s ≥ 1, and the dashed line indicates a site available for bonding. 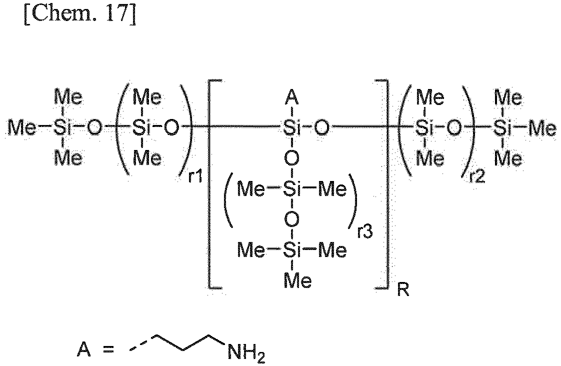 Here, r1 ≥ 0, r2 ≥ 0, r3 ≥ 0, R ≥ 1, and the dashed line indicates a site available for bonding.

### Component (B)

Component (B) is an organic compound of general formula (5) or (6) below 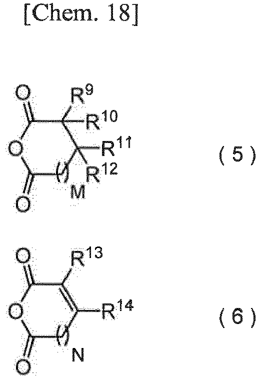 (wherein R⁹ to R¹⁴, which may be mutually the same or different, are hydrogen atoms or substituted or unsubstituted monovalent hydrocarbon groups of 1 to 10 carbon atoms, and R⁹ or R¹⁰ and R¹¹ or R¹², or R¹³ and R¹⁴, may bond together to form a ring; and M and N are integers from 0 to 3).

In above formulas (5) and (6), R⁹ to R¹⁴, which may be mutually the same or different, are hydrogen atoms or substituted or unsubstituted monovalent hydrocarbon groups of 1 to 10 carbon atoms. Examples of monovalent hydrogen groups include alkyl groups such as methyl, ethyl, propyl and butyl groups, cycloalkyl groups such as the cyclohexyl group, and aryl groups such as the phenyl group. In addition, some or all of the hydrogen atoms bonded to carbon atoms on these groups may be substituted with halogen atoms or other groups. Exemplary substituents include trifluoromethyl and 3,3,3-trifluoropropyl groups. Hydrogen atoms and methyl groups are preferred.

R⁹ or R¹⁰ and R¹¹ or R¹², or R¹³ and R¹⁴, may bond together to form a ring. Examples of the ring include cyclopropane, cyclobutane, cyclopentane, cyclohexane and benzene rings. A benzene ring is preferred.

M and N are each integers from 0 to 3, preferably integers from 0 to 2, and more preferably 0 or 1.

Specific structures of component (B) are shown below, but are not limited to these.

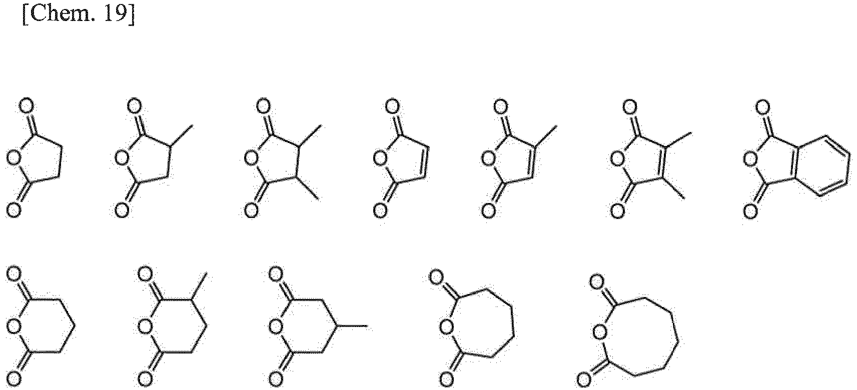

Component (B) is preferably succinic anhydride, maleic anhydride, glutaric anhydride, adipic anhydride, pimelic anhydride or phthalic anhydride, and more preferably succinic anhydride or maleic anhydride.

Component (B) is used in an amount corresponding to a molar ratio of from 1 to 3, preferably from 1 to 2.5, and more preferably from 1 to 2, with respect to the amino groups in component (A). At a molar ratio lower than 1, unreacted amino groups remain, which may worsen the heat resistance or may, when rendered into the subsequently described composition, give rise to poor curing. At a molar ratio higher than 3, the efficiency may worsen due to the removal of unreacted component (B) during purification.

### Component (C)

Component (C) is a Lewis acid catalyst. Various types of Lewis acids can be mentioned as examples, including boron compounds, aluminum compounds, scandium compounds, titanium compounds, vanadium compounds, iron compounds, cobalt compounds, nickel compounds, copper compounds, zinc compounds, lanthanum compounds and cerium compounds. A metal compound is preferred, with a zinc compound being especially preferred.

Zinc compounds that may be suitably used include the following inorganic zinc compounds: halogenated zinc compounds such as zinc chloride, zinc bromide and zinc iodide; and zinc salts such as zinc nitrate, zinc sulfate, zinc carbonate and zinc trifluoromethanesulfonate. Zinc chloride and zinc bromide are preferred.

Component (C) is used in an amount corresponding to a molar ratio of from 0.1 to 2, preferably from 0.2 to 1.8, and more preferably from 0.5 to 1.5, with respect to the amino groups in component (A). At a molar ratio lower than 0.1, the reaction slows and a long time may be required. On the other hand, at a molar ratio higher than 2, the efficiency may worsen due to removal of component (C) from the reaction system.

### Component (D)

Component (D) is a silylating agent. Exemplary silylating agents include chlorosilane compounds and disilazane compounds. A disilazane compound is preferred.

Examples of disilazane compounds include hexamethyldisilazane, 1,1,3,3-tetramethyldisilazane, 1,3-divinyl-1,1,3,3-tetramethyldisilazane and 1,3-diphenyl-1,1,3,3-tetramethyldisilazane. Hexamethyldisilazane is preferred.

Component (D) is used in an amount corresponding to a molar ratio of from 1 to 3, preferably from 1.1 to 2.8, and more preferably from 1.2 to 2.5, with respect to the amino groups in component (A). At a molar ratio lower than 1, the reaction may not fully proceed. On the other hand, at a molar ratio higher than 3, the efficiency may worsen due to removal of component (D) from the reaction system.

### Component (E)

Component (E) is an organic solvent, this being a reaction solvent for dissolving the substrate (components (A) and (B)). Examples of component (E) include aromatic hydrocarbon solvents such as toluene and xylene; aliphatic hydrocarbon solvents such as hexane, heptane, octane, isooctane, decane, cyclohexane, methylcyclohexane and isoparaffin; hydrocarbon solvents such as industrial gasoline, petroleum benzin and solvent naphtha; ketone solvents such as acetone, methyl ethyl ketone, 2-pentanone, 3-pentanone, 2-hexanone, 2-heptanone, 4-heptanone, methyl isobutyl ketone, diisobutyl ketone, acetonylacetone and cyclohexanone; ester solvents such as ethyl acetate, propyl acetate, isopropyl acetate, butyl acetate and isobutyl acetate; ether solvents such as diethyl ether, dipropyl ether, diisopropyl ether, dibutyl ether, 1,2-dimethoxyethane and 1,4-dioxane; esters such as 2-methoxyethyl acetate, 2-ethoxyethyl acetate, propylene glycol monomethyl ether acetate and 2-butoxyethyl acetate; solvents having an ether moiety, and mixed solvents of the above. These may be used singly or two or more may be suitably combined and used together.

Component (E) is preferably a solvent which dissolves component (A) and component (D), but does not dissolve component (C). This is to enable component (C) to be easily removed following reaction completion. That is, in cases where component (C) does not dissolve, it can be removed by filtration; by contrast, in cases where component (C) dissolves, a cleaning operation is needed, resulting in a poor efficiency and yield. Component (B) may or may not dissolve in component (E). However, the reaction proceeds more rapidly when it dissolves, and so it is preferable for component (B) to dissolve in component (E).

The amount of component (E) included per 100 parts by weight of component (A) is from 0 to 5,000 parts by weight, preferably from 0 to 4,000 parts by weight, and more preferably from 0 to 3,000 parts by weight. When more than 5,000 parts by weight is included, the reaction may proceed more slowly. When component (E) is included, the content thereof is preferably set to at least 200 parts by weight, and especially at least 500 parts by weight.

The organopolysiloxane of above average compositional formula (1) is prepared using above components (A) to (E).

### Addition Reaction of Components (A) and (B)

Components (A) and (B) are the reaction substrate. More specifically, component (A) is the base resin and component (B) is the reactant. When components (A) and (B) are mixed together in the presence of, optionally, component (E), they react exothermally even at room temperature (25°C) to form an organopolysiloxane (F) of the average composition formula (7) below. 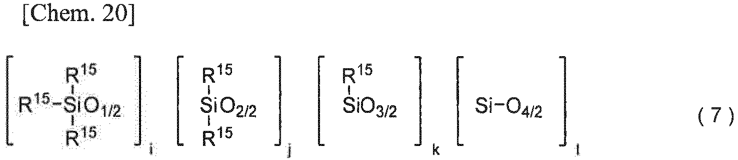 In this formula, the R¹⁵ moieties, which may be the same or different, are substituted or unsubstituted monovalent hydrocarbon groups of 1 to 10 carbon atoms or organic groups having a structure of general formula (8) or (9) below, at least one R¹⁵ moiety including an organic group having a structure of general formula (8) or (9) below; and the subscript i is an integer of 2 or more, the subscript j is an integer of 0 or more, the subscript k is an integer of 0 or more, the subscript 1 is an integer of 0 or more, and 2 ≤ i+j+k+l ≤ 1,000). 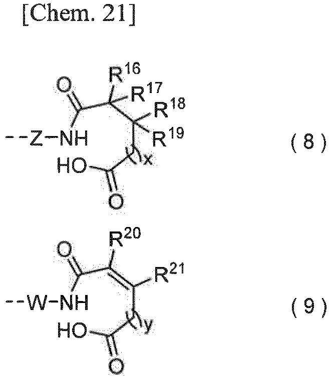 Here, R¹⁶ to R²¹, which may be mutually the same or different, are hydrogen atoms or substituted or unsubstituted monovalent hydrocarbon groups of 1 to 10 carbon atoms, and R¹⁶ or R¹⁷ and R¹⁸ or R¹⁹, or R²⁰ and R²¹, may bond together to form a ring; the subscripts x and y are integers from 0 to 3; Z and W are substituted or unsubstituted divalent hydrocarbon groups of 1 to 10 carbon atoms which may have an intervening heteroatom; and the dashed line represents a site available for bonding.

In above formula (7), the R¹⁵ moieties, which may be the same or different, are substituted or unsubstituted monovalent hydrocarbon groups of 1 to 10 carbon atoms or organic groups having a structure of general formula (8) or (9) above, at least one R¹⁵ moiety including an organic group having a structure of general formula (8) or (9) above. Exemplary monovalent hydrocarbon groups include alkyl groups such as methyl, ethyl, propyl and butyl groups, cycloalkyl groups such as the cyclohexyl group, and aryl groups such as the phenyl group. In addition, some or all of the hydrogen atoms bonded to carbon atoms on these groups may be substituted with halogen atoms or other groups. Exemplary substituents include trifluoromethyl and 3,3,3-trifluoropropyl groups. Of these, a saturated aliphatic group or an aromatic group is preferred, with a methyl group or phenyl group being more preferred.

At least one, preferably from 2 to 200, and more preferably from 2 to 150 R¹⁵ moieties are organic groups having a structure of general formula (8) or (9).

In formulas (8) and (9), R¹⁶ to R²¹, which may be mutually the same or different, are hydrogen atoms or substituted or unsubstituted monovalent hydrocarbon groups of 1 to 10 carbon atoms. Exemplary monovalent hydrocarbon groups include alkyls groups such as methyl, ethyl, propyl and butyl groups, cycloalkyl groups such as the cyclohexyl group, and aryl groups such as the phenyl group. In addition, some or all hydrogen atoms bonded to carbon atoms on these groups may be substituted with halogen atoms or other groups. Exemplary substituents include trifluoromethyl and 3,3,3-trifluoropropyl groups, with hydrogen atoms and methyl groups being preferred.

R¹⁶ or R¹⁷ and R¹⁸ or R¹⁹, or R²⁰ and R²¹, may bond together to form a ring. Examples of such rings include cyclopropane, cyclobutane, cyclopentane, cyclohexane and benzene rings, with a benzene ring being preferred.

The subscripts x and y are integers from 0 to 3, preferably from 0 to 2, and more preferably 0 or 1.

Z and W are substituted or unsubstituted divalent hydrocarbon groups of 1 to 10 carbon atoms which may have an intervening heteroatom. Examples include alkylene groups such as CH₂, C₂H₄, C₃H₆, C₄H₈, C₅H₁₀ and C₆H₁₂ which may have an intervening ether group or thioether group. Alternatively, a cyclic structure such as a phenylene or cyclohexylene group may be formed, and some or all of the hydrogen atoms bonded to carbon atoms may be substituted with halogen atoms or other groups.

Exemplary structures of general formulas (8) and (9) include, but are not limited to, those shown below. 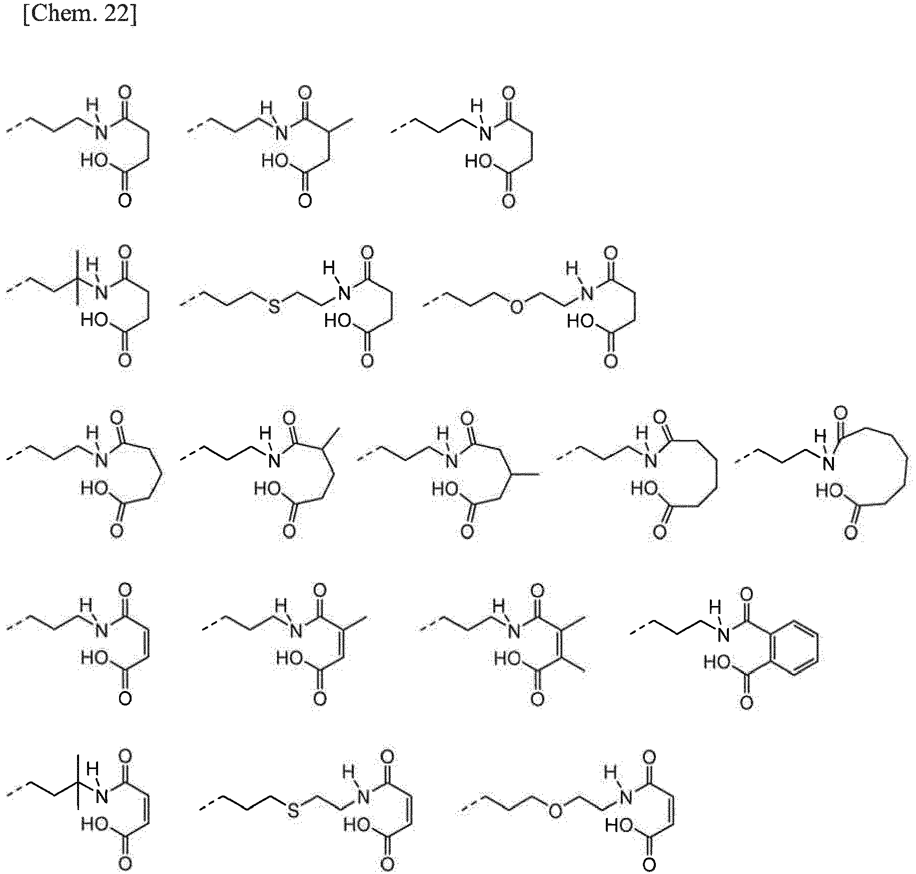 In the formulas, the dashed line indicates a site available for bonding.

In above formula (7), the subscript i is an integer of 2 or more, and preferably from 2 to 12; the subscript j is an integer of 0 or more, preferably from 1 to 998, more preferably from 5 to 998, and even more preferably from 5 to 500; the subscript k is an integer of 0 or more, and preferably from 0 to 10; the integer 1 is an integer of 0 or more, and preferably from 0 to 5; and 2 ≤ i+j+k+l ≤ 1,000, and preferably 7 ≤ i+j+k+l ≤ 527. When the sum i+j+k+l is larger than 1,000, the viscosity may be high and the workability may worsen.

Exemplary structures of component (F) include, but are not limited to, those of the formulas shown below. In the following formulas, "Me" and "Ph" stand for, respectively, a methyl group and a phenyl group. Also, "B" is represented by the structures shown below, although any organic group having the structure in formula (8) or (9) is acceptable. 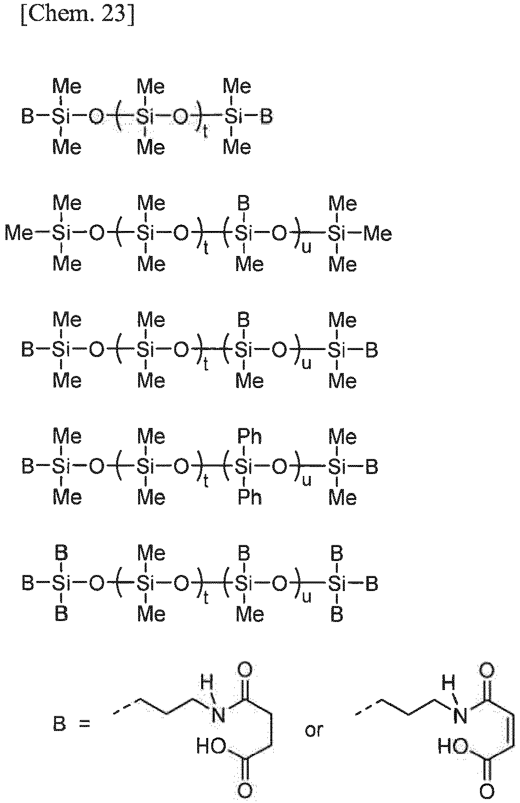 Here, t ≥ 0, u ≥ 1, and a dashed line indicates a site available for bonding. 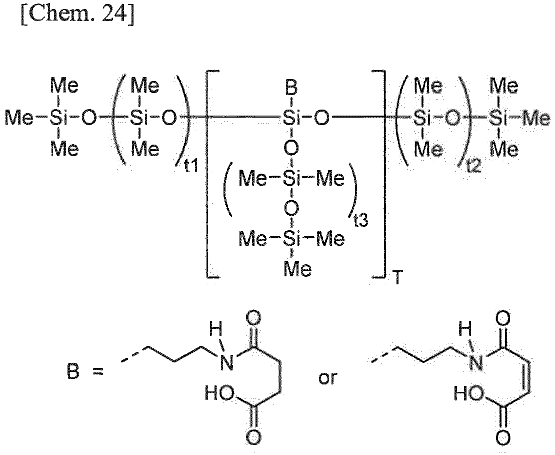 Here, t1 ≥ 0, t2 ≥ 0, t3 ≥ 0, T ≥ 1, and a dashed line indicates a site available for bonding.

### Catalytic Imidization Reaction

When a condensation reaction between the amide groups and carboxyl groups in component (F) arises, the target organopolysiloxane of average compositional formula (1) can be obtained. However, having the reaction proceed by heating alone is difficult; a reaction temperature of about 200°C or even more is required, which is energetically disadvantageous. It is for this reason that above components (C) and (D) are needed.

Ring closure and imidization by a condensation reaction is required in order to obtain an organopolysiloxane of average composition formula (1) from component (F). Components (C) and (D) are used for this purpose.

Component (C) is a catalyst, and component (D) is a reagent for silyl capping carboxyl groups in component (F). When components (F) and (C) are mixed together and component (D) is added thereto, the carboxyl groups in component (F) are silylated. With the application of heat, the silylated carboxyl groups and the amide groups condense, enabling an organopolysiloxane of formula (1) to be obtained. Condensation does not readily arise with carboxyl groups, but silylation of these groups makes it easier for condensation to proceed. It is thought that reacting component (C) with component (D) plays two roles at this time; namely, that of forming an active species for silylation and, although the detailed mechanism is not clear, that of catalyzing the condensation reaction.

### Purification of Product

Following the completion of imidization, because the ammonia generated from component (D) is present within the system, it must be removed. The method for removing ammonia involves neutralizing the ammonia by reacting it with an acidic substance, and filtering off the resulting salt. Examples of the acidic substance include hydrochloric acid, sulfuric acid, nitric acid, phosphoric acid, boric acid, formic acid, acetic acid, citric acid, lactic acid and butyric acid. From the standpoint of the reactivity, the acidic substance is preferably a liquid. Acetic acid and phosphoric acid are preferred.

If Component (C) is insoluble in component (E), it can be removed by filtration. When it is dissolved within component (E), it must be washed and eliminated from the system by liquid-liquid extraction.

Unreacted component (B) and components (D) and (E) can be removed by vacuum distillation.

The target organopolysiloxane of the invention can be prepared by the foregoing steps.

The organopolysiloxane of the invention has an excellent heat resistance and can be suitably used in various applications, including oils such as industrial heat transfer media and lubricants, heat-resistant coating materials, heat-resistant rubber materials, and additives for resins.

### Curable Composition that Uses an Organopolysiloxane

The method of preparation of the application can be used to prepare organopolysiloxanes for use in curable compositions. Such compositions include an organopolysiloxane of the above average compositional formula (1). In particular, it is preferably one wherein the R¹ moieties in formula (1), which may be the same or different, are substituted or unsubstituted monovalent hydrocarbon groups of 1 to 10 carbon atoms or organic groups having a structure of general formula (3') below, at least one R¹ moiety including an organic group having a structure of general formula (3') below. 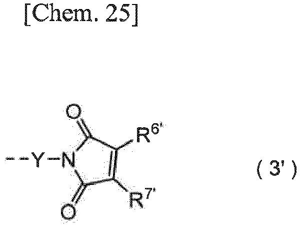 Here, R^{6'} and R^{7'}, which may be mutually the same or different, are hydrogen atoms or substituted or unsubstituted monovalent hydrocarbon groups of 1 to 5 carbon atoms, Y is as defined above, and the dashed line represents a site available for bonding.

In formula (3'), R^{6'} and R^{7'}, which may be mutually the same or different, are hydrogen atoms or substituted or unsubstituted monovalent hydrocarbon groups of 1 to 5 carbon atoms. Exemplary monovalent hydrocarbon groups include alkyl groups such as methyl, ethyl, propyl and butyl groups. In addition, some or all of the hydrogen atoms bonded to carbon atoms on these groups may be substituted. Examples of the substituents include trifluromethyl and 3,3,3-trifluoropropyl groups. R^{6'} and R^{7'} are preferably hydrogen atoms or methyl groups, with hydrogen atoms being especially preferred.

Specific structures of general formula (3') are shown below, but are not limited to these. 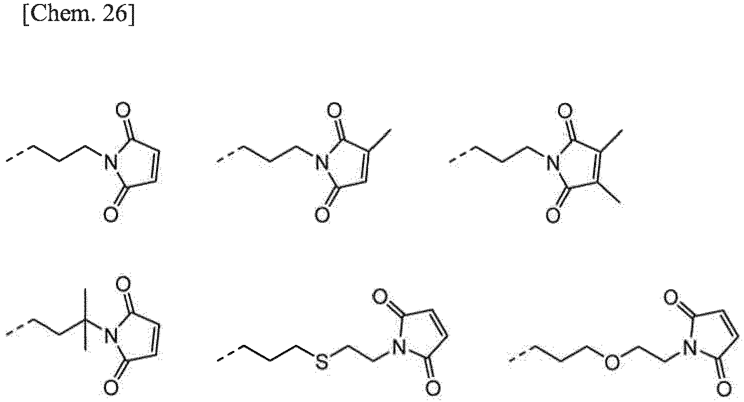 Here, a dashed line indicates a site available for bonding.

In formula (1), the organopolysiloxane that includes as the R¹ moiety an organic group of formula (3') has a structure which is exemplified by, but not limited to, those of the following formulas. In the formulas below, "Me" and "Ph" stand for, respectively, a methyl group and a phenyl group. Also, "I" stands for a N-maleimidopropyl group, although this may be any organic group having a structure of formula (3'). 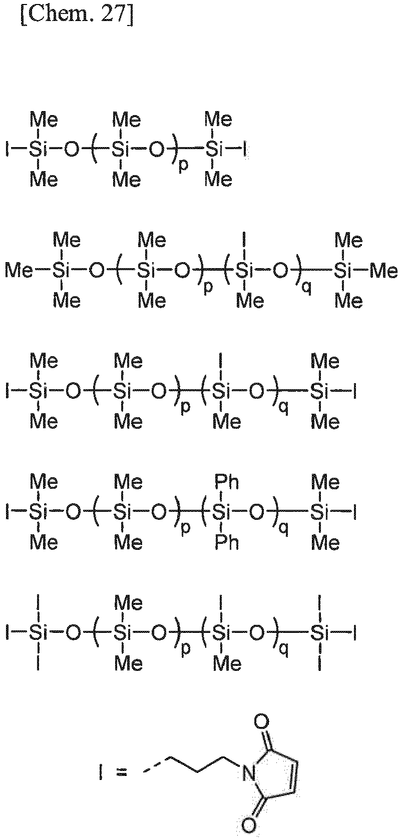 Here, p ≥ 0, q ≥ 1, and the dashed line indicates a site available for bonding. 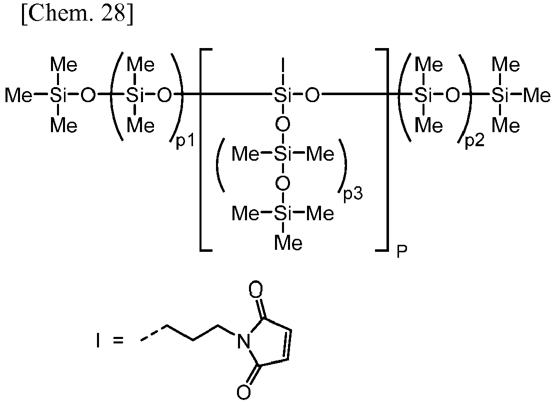 Here, p1 ≥ 0, p2 ≥ 0, p3 ≥ 0, P ≥ 1, and the dashed line indicates a site available for bonding.

The organic groups (functional groups) of the structure represented by formula (3') above are thought to give rise to two reactions when exposed to light; namely, radical polymerization at carbon-carbon double bond sites and dimerization. It is possible to form the cured product of the invention by way of these reactions. Moreover, neither reaction requires a photopolymerization initiator.

Curable compositions can include the organopolysiloxane of formula (1') above. This curable composition may consist solely of the organopolysiloxane of formula (1'), although other additives may be included. Specific examples of such additives include photopolymerization initiators, antioxidants, reactive diluents, leveling agents, fillers, antistatic agents, defoamers and pigments.

Because the organopolysiloxane of formula (1') can be cured by exposure to light, it is possible to use such a curable composition without including a photoinitiator.

Curable compositions comprising organopolysiloxanes prepared by the method of the invention can be cured by exposure to light, and especially exposure to radiation. Energy rays in the ultraviolet to visible light region (from about 100 nm to about 800 nm) obtained from, preferably, high-pressure or ultrahigh-pressure mercury vapor lamps, metal halide lamps, xenon lamps, carbon arc lamps, fluorescent lamps, semiconductor solid state lasers, argon lasers, He-Cd lasers, KrF excimer lasers, ArF excimer lasers, F₂ lasers and the like can be advantageously used as the radiation. A radiation light source having a high brightness at 200 to 400 nm is preferred. In addition, high-energy radiation such as electron beams or x-rays can also be used. With regard to the radiation energy exposure temperature and time, exposure for a period of from about 0.1 second to about 10 seconds at standard temperature (25°C) suffices, although in cases where the energy ray transmittivity is low or the film thickness of the curable composition is large, it may be preferably to carry out exposure for a longer period of time. Where necessary, following exposure to the energy rays, a postcure that entails heating at from room temperature (25°C) to 150°C for a period of from several seconds to several hours is also possible.

The curable composition comprising organopolysiloxanes prepared by the method of the invention can be suitably used in coating materials, rubber materials and the like. Examples of products which use the cured form of this composition include parting films, pressure-sensitive adhesive films, adhesives, encapsulants, rubber rollers, heat-dissipating sheets and sealants.

### EXAMPLES

The invention is illustrated more fully below by way of Examples and Comparative Examples. However, the invention is not limited by these Examples. In the Examples below, "Me" stands for a methyl group.

### Example 1

A 300 mL three-neck flask fitted with a stirrer, a thermometer, a dropping funnel and a reflux condenser was charged with 3.20 g (0.032 mol) of succinic anhydride as component (B) and 81.74 g (70 wt%) of toluene as component (E). These ingredients were mixed and stirred at room temperature (25°C), during which time 13.76 g (0.032 mol in terms of amino groups) of the organopolysiloxane of formula (A-1) below that had been charged into the dropping funnel as component (A) was added dropwise thereto. Following the completion of dropwise addition, the flask contents were stirred 4 hours at room temperature (25°C), the flask was charged with 7.20 g (0.032 mol) of zinc bromide as component (C), and the system was heated to 50°C. To this was added dropwise, as component (D), 7.76 g (0.048 mol) of hexamethyldisilazane that had been charged into a dropping funnel. Following the completion of dropwise addition, the system was aged for one hour at 80°C and then allowed to cool to 40°C or below, at which point 3.17 g (0.053 mol) of acetic acid was added dropwise and the system was further aged for 30 minutes. Solids within the reaction solution were removed by filtration, and vacuum distillation was carried out at 70°C for one hour, followed by additional vacuum distillation at 120°C for one hour, thereby giving a clear yellow liquid. As a result of analysis, this was confirmed to be an organopolysiloxane of formula (I) below.

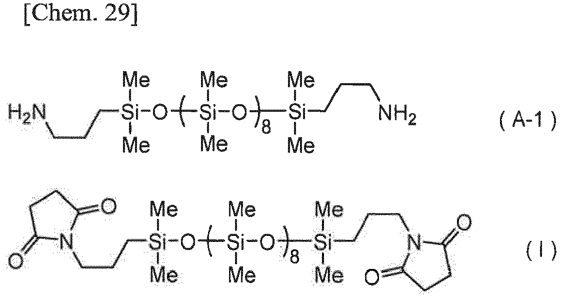

### Example 2

Aside from using 3.14 g (0.032 mol) of maleic anhydride instead of succinic anhydride as component (B), preparation was carried out in the same way as in Example 1, giving a clear yellow liquid. As a result of analysis, this was confirmed to be an organopolysiloxane of formula (II) below.

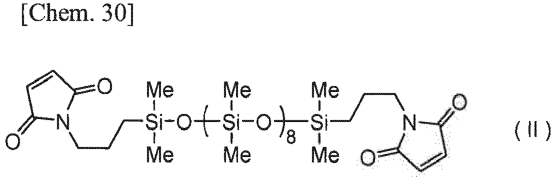

### Example 3

Aside from using 3.65 g (0.032 mol) of glutaric anhydride instead of succinic anhydride as component (B), preparation was carried out in the same way as in Example 1, giving a black liquid. As a result of analysis, this was confirmed to be an organopolysiloxane of formula (III) below.

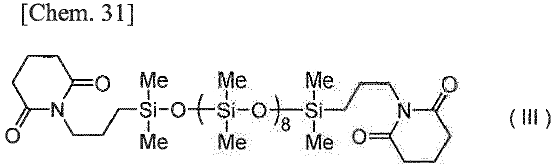

### Example 4

Aside from using 4.74 g (0.032 mol) of phthalic anhydride instead of succinic anhydride as component (B), preparation was carried out in the same way as in Example 1, giving a clear yellow liquid. As a result of analysis, this was confirmed to be an organopolysiloxane of formula (IV) below.

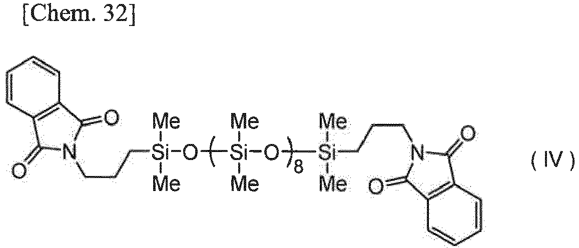

### Example 5

Aside from using 13.33 g (0.032 mol) of the organopolysiloxane of formula (A-2) below instead of the organopolysiloxane of formula (A-1) as component (A), preparation was carried out in the same way as in Example 2, giving a clear yellow liquid. As a result of analysis, this was confirmed to be an organopolysiloxane of formula (V) below.

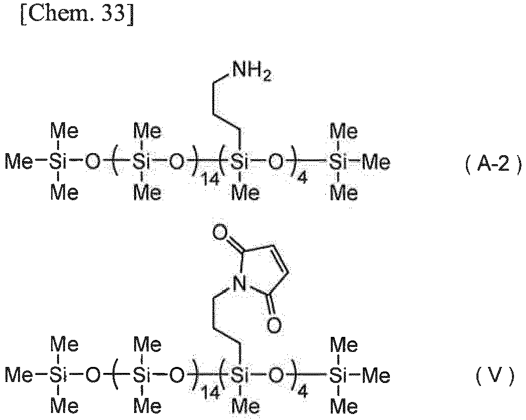

### Heat Resistance

The heat resistance of the organopolysiloxanes of Examples 1 to 4 obtained as described above were evaluated by thermogravimetric analysis. Specifically, 10 mg of sample was placed in the apparatus, heated in air from room temperature (25°C) to 400°C at a temperature rise rate of 10°C/min, and the temperature at which the weight loss ratio became 5% was measured. The measurement apparatus used was the Thermo plus TG8120 (from Rigaku Corporation). As Comparative Example 1, the heat resistance of the organopolysiloxane of above formula (A-1) was evaluated. These results are shown presented in Table 1.

**Table 1**

| | Example 1 | Example 2 | Example 3 | Example 4 | Comparative Example 1 |
|---|---|---|---|---|---|
| Sample (formula) | (I) | (II) | (III) | (IV) | (A-1) |
| Modifying functional group | succinimide | maleimide | glutarimide | phthalimide | amino |
| 5% Weight loss temperature (°C) | 282 | 288 | 281 | 288 | 175 |

The results in Table 1 demonstrate that the organopolysiloxanes of the invention have temperatures at the same loss of weight that are higher than those of the amino-modified polysiloxanes serving as the starting material, and thus have a better heat resistance.

### Example 6

The coating film obtained by coating the organopolysiloxane prepared in Example 2 in an amount of about 0.6 g/m² onto polyethylene (PE) laminated paper was exposed to ultraviolet light using two 80 W/cm² high-pressure mercury vapor lamps, and was then evaluated by the following method to determine whether it had cured.

### Curability

The curability of the organopolysiloxane was evaluated using a UV irradiation system. That is, the coating film obtained by applying the organopolysiloxane onto PE laminated paper in an amount of about 0.6 g/m² was irradiated, using two 80 W/cm² high-pressure mercury vapor lamps, with ultraviolet light in a dose of from 200 to 500 mJ/cm² at a temperature of 25°C. The condition of the film following exposure was evaluated according to the following criteria. The results are presented in Table 2.
O: Film is cured and, when touched by finger, resin does not stick to finger
X: When film is touched by finger, uncured resin sticks

### Example 7

Aside from using the organopolysiloxane prepared in Example 5, the same procedure was carried out as in Example 6.

### Comparative Example 2

Aside from using the organopolysiloxane of formula (VI) below, the same procedure was carried out as in Example 6.

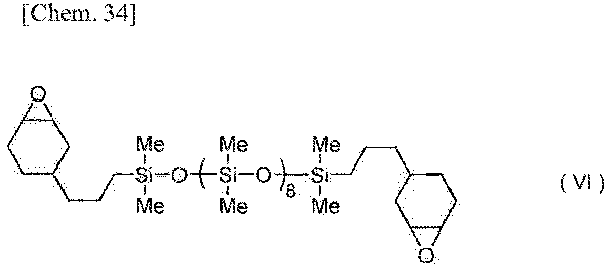

### Comparative Example 3

Aside from using the organopolysiloxane of formula (VII) below, the same procedure was carried out as in Example 6.

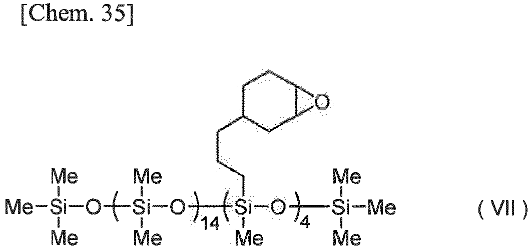

### Comparative Example 4

Aside from using the organopolysiloxane of formula (VIII) below, the same procedure was carried out as in Example 6.

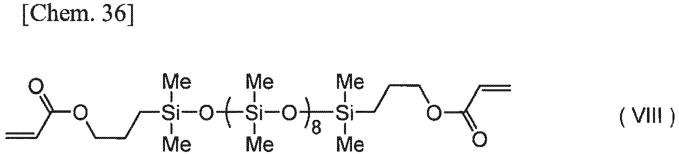

### Comparative Example 5

Aside from using the organopolysiloxane of formula (IX) below, the same procedure was carried out as in Example 6.

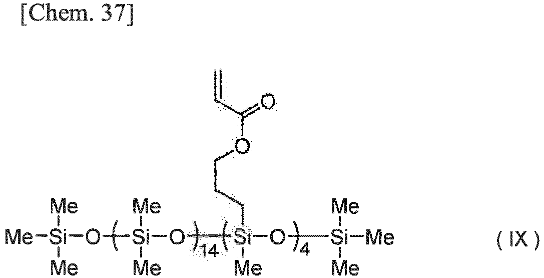

### Comparative Example 6

Aside from using a mixture of the organopolysiloxane of formula (X) below and the organopolysiloxane of formula (XI) below in the weight ratio (X)/(XI) = 59.2/40.8 (the mercapto groups included in (XI) having a molar ratio of 2.0 with respect to the vinyl groups included in (X)), the same procedure was carried out as in Example 6.

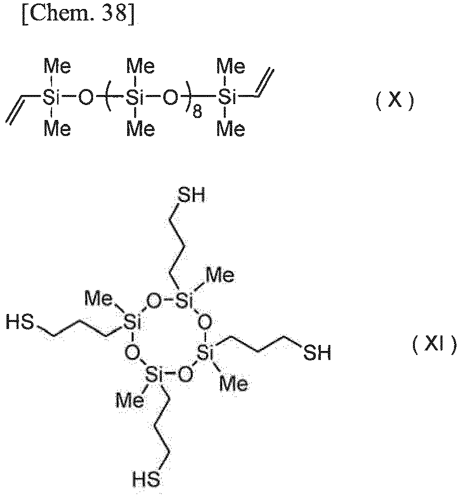

### Comparative Example 7

Aside from using a mixture of the organopolysiloxane of formula (XII) below and the organopolysiloxane of formula (XI) above in the weight ratio (XII)/(XI) = 59.0/41 (the mercapto groups included in (XI) having a molar ratio of 2.0 with respect to the vinyl groups included in (XII)), the same procedure was carried out as in Example 6.

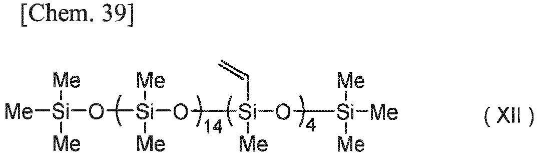

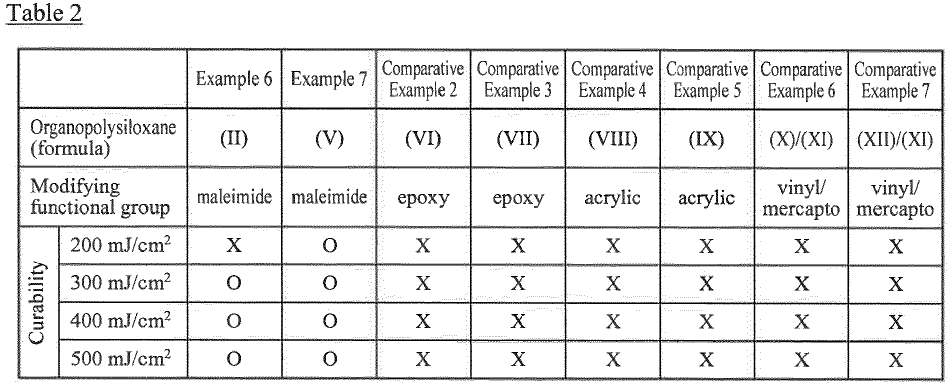

The results in Table 2 show that, for the organopolysiloxanes prepared by the method of the invention, even without the addition of a photoinitiator, the coating films could be cured by exposure to ultraviolet light. Accordingly, they show promise for use in one-part photocurable compositions that do not require a photoinitiator.

## Claims

1. A method for preparing an organopolysiloxane which has average compositional formula (1) below and includes per molecule at least one organic group with a structure of general formula (2) or (3) below 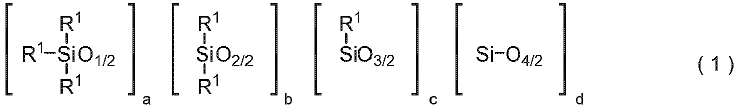 wherein the R¹ moieties, which may be the same or different, are substituted or unsubstituted monovalent hydrocarbon groups of 1 to 10 carbon atoms or organic groups having a structure of general formula (2) or (3) below, at least one R¹ moiety including an organic group having a structure of general formula (2) or (3) below; subscript a is an integer of 2 or more, subscript b is an integer of 0 or more, subscript c is an integer of 0 or more, subscript d is an integer of 0 or more, and 2 ≤ a+b+c+d ≤ 1,000: 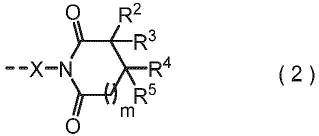 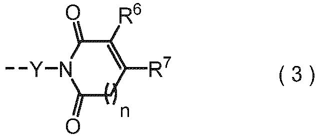 wherein R² to R⁷, which may be mutually the same or different, are hydrogen atoms or substituted or unsubstituted monovalent hydrocarbon groups of 1 to 10 carbon atoms, and R² or R³ and R⁴ or R⁵, or R⁶ and R⁷, may bond together to form a ring; subscripts m and n are integers from 0 to 3; X and Y are substituted or unsubstituted divalent hydrocarbon groups of 1 to 10 carbon atoms which may have an intervening heteroatom; and the dashed line represents a bonding site,
the method using:
(A) 100 parts by weight of organopolysiloxane which has average compositional formula (4) below and includes at least one amino group-containing organic group of 1 to 10 carbon atoms per molecule 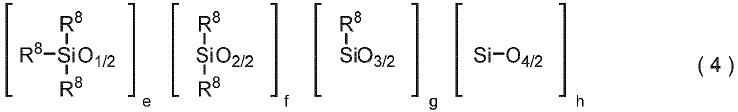 wherein the R⁸ moieties, which may be the same or different, are substituted or unsubstituted monovalent hydrocarbon groups of 1 to 10 carbon atoms or amino group-containing organic groups of 1 to 10 carbon atoms, at least one R⁸ moiety including an amino group-containing organic group of 1 to 10 carbon atoms; subscript e is an integer of 2 or more, subscript f is an integer of 0 or more, subscript g is an integer of 0 or more, subscript h is an integer of 0 or more, and 2 ≤ e+f+g+h ≤ 1,000,
(B) organic compound of general formula (5) or (6) below, in an amount corresponding to a molar ratio of from 1 to 3 with respect to the amino groups in component (A) 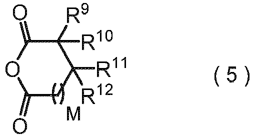 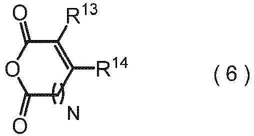 wherein R⁹ to R¹⁴, which may be mutually the same or different, are hydrogen atoms or substituted or unsubstituted monovalent hydrocarbon groups of 1 to 10 carbon atoms, and R⁹ or R¹⁰ and R¹¹ or R¹², or R¹³ and R¹⁴, may bond together to form a ring; and M and N are integers from 0 to 3,
(C) Lewis acid catalyst, in an amount corresponding to a molar ratio of from 0.1 to 2 with respect to the amino groups in component (A),
(D) silylating agent, in an amount corresponding to a molar ratio of from 1 to 3 with respect to the amino groups in component (A), and
(E) organic solvent, in an amount of from 0 to 5,000 parts by weight per 100 parts by weight of component (A),
which method comprises the steps of:
(I) reacting component (A) with component (B), optionally in the presence of component (E), to form an organopolysiloxane (F) of average compositional formula (7) below 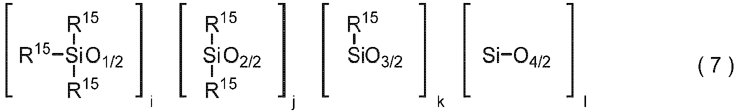 wherein the R¹⁵ moieties, which may be the same or different, are substituted or unsubstituted monovalent hydrocarbon groups of 1 to 10 carbon atoms or organic groups having a structure of general formula (8) or (9) below, at least one R¹⁵ moiety including an organic group having a structure of general formula (8) or (9) below; subscript i is an integer of 2 or more, subscript j is an integer of 0 or more, subscript k is an integer of 0 or more, subscript 1 is an integer of 0 or more, and 2 ≤ i+j+k+l ≤ 1,000 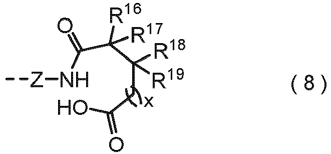 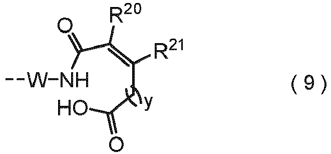 wherein R¹⁶ to R²¹, which may be mutually the same or different, are hydrogen atoms or substituted or unsubstituted monovalent hydrocarbon groups of 1 to 10 carbon atoms, and R¹⁶ or R¹⁷ and R¹⁸ or R¹⁹, or R²⁰ and R²¹, may bond together to form a ring; subscripts x and y are integers from 0 to 3; Z and W are substituted or unsubstituted divalent hydrocarbon groups of 1 to 10 carbon atoms which may have an intervening heteroatom; and the dashed line represents a site available for bonding;
(II) subsequently mixing in components (C) and (D) and effecting a condensation reaction between amide groups and carboxyl groups in component (F);
(III) neutralizing the ammonia by reacting it with an acidic substance, and filtering off the resulting salt .

2. Organopolysiloxane preparation method of claim 1 wherein, in formula (1), the subscript a is an integer from 2 to 12, the subscript b is an integer from 5 to 500, the subscript c is an integer from 0 to 10, the subscript d is an integer from 0 to 5, and the sum a+b+c+d is from 7 to 527.

3. Organopolysiloxane preparation method of claim 1 or 2, wherein component (A) has an amine equivalent weight of from 200 to 5,000 g/mol.

4. Organopolysiloxane preparation method of claim 1 wherein (A) is selected from the following compounds, wherein "Me" and "Ph" respectively stand for methyl and phenyl groups, the dashed line indicates a bonding site, and "A" may be the indicated aminopropyl group, or may be another amino group-containing organic group of 1 to 10 carbon atoms: 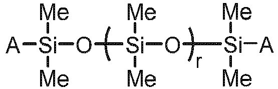 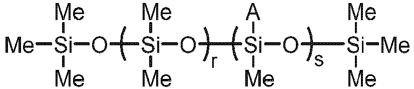 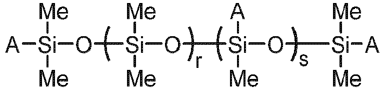 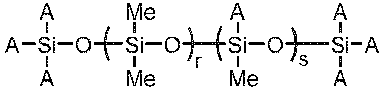 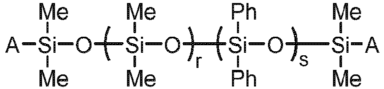 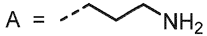 where r ≥ 0, s ≥ 1 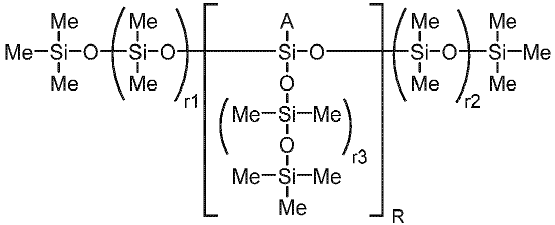 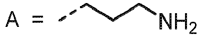 where r1 ≥ 0, r2 ≥ 0, r3 ≥ 0, R ≥ 1.

5. Organopolysiloxane preparation method of any one of claims 1 to 4, wherein component (B) is succinic anhydride, maleic anhydride, glutaric anhydride, adipic anhydride, pimelic anhydride or phthalic anhydride.

6. Organopolysiloxane preparation method of any one of claims 1 to 5, wherein component (C) is a Lewis acid catalyst selected from boron compounds, aluminum compounds, scandium compounds, titanium compounds, vanadium compounds, iron compounds, cobalt compounds, nickel compounds, copper compounds, zinc compounds, lanthanum compounds and cerium compounds.

7. Organopolysiloxane preparation method of any one of claims 1 to 6, wherein component (C) is a metal compound.

8. Organopolysiloxane preparation method of claim 7, wherein component (C) is a zinc compound.

9. Organopolysiloxane preparation method of any one of claims 1 to 8, wherein component (C) is used in an amount corresponding to a molar ratio of from 0.1 to 2 with respect to the amino groups in component (A).

10. Organopolysiloxane preparation method of any one of claims 1 to 9, wherein component (D) is a disilazane compound.

11. Organopolysiloxane preparation method of any one of claims 1 to 10, wherein component (D) is used in an amount corresponding to a molar ratio of from 1 to 3 with respect to the amino groups in component (A).

12. Organopolysiloxane preparation method of any one of claims 1 to 11, wherein the acidic substance used for neutralizing the ammonia is acetic acid or phosphoric acid.

## Patentansprüche

1. Verfahren zur Herstellung eines Organopolysiloxans, das die nachstehende mittlere Zusammensetzungsformel (1) aufweist und pro Molekül zumindest eine organische Gruppe mit einer Struktur der nachstehenden allgemeinen Formel (2) oder (3) aufweist: 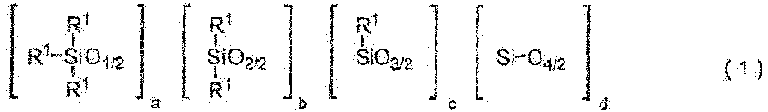 worin die Gruppierungen R¹, die gleich oder unterschiedlich sein können, substituierte oder unsubstituierte einwertige Kohlenwasserstoffgruppen mit 1 bis 10 Kohlenstoffatomen oder organische Gruppen mit einer Struktur der nachstehenden allgemeinen Formel (2) oder (3) sind, wobei zumindest eine Gruppierung R¹ eine organische Gruppe mit einer Struktur der nachstehenden allgemeinen Formel (2) oder (3) umfasst; der Index a eine ganze Zahl von 2 oder mehr ist, der Index b eine ganze Zahl von 0 oder mehr ist, der Index c eine ganze Zahl von 0 oder mehr ist, der Index d eine ganze Zahl von 0 oder mehr ist und Folgendes gilt: 2 ≤ a+b+c+d ≤ 1.000, 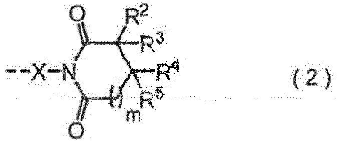 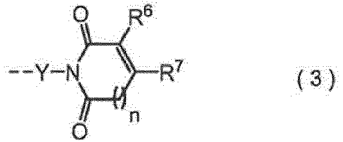 worin R² bis R⁷, die gleich oder unterschiedlich sein können, Wasserstoffatome oder substituierte oder unsubstituierte einwertige Kohlenwasserstoffgruppen mit 1 bis 10 Kohlenstoffatomen sind und R² oder R³ und R⁴ oder R⁵ oder R⁶ und R⁷ gegebenenfalls zu einem Ring verbunden sind; die Indizes m und n ganze Zahlen von 0 bis 3 sind; X und Y substituierte oder unsubstituierte zweiwertige Kohlenwasserstoffgruppen mit 1 bis 10 Kohlenstoffatomen sind, die gegebenenfalls ein dazwischenliegendes Heteroatom aufweisen; und die gestrichelte Linie eine Bindungsstelle darstellt,
wobei im Verfahren Folgendes eingesetzt wird:
(A) 100 Gewichtsteile Organopolysiloxan, das die nachstehende mittlere Zusammensetzungsformel (4) aufweist und zumindest eine Aminogruppen-hältige organische Gruppe mit 1 bis 20 Kohlenstoffatomen pro Molekül umfasst, 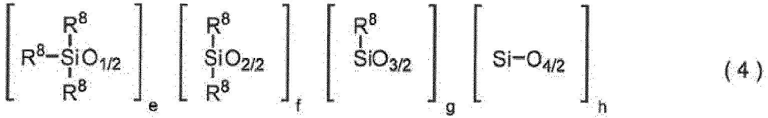 worin die Gruppierungen R⁸, die gleich oder unterschiedlich sein können, substituierte oder unsubstituierte einwertige Kohlenwasserstoffgruppen mit 1 bis 10 Kohlenstoffatomen oder Aminogruppen-hältige organische Gruppen mit 1 bis 10 Kohlenstoffatomen sind, wobei zumindest eine Gruppierung R⁸ eine Aminogruppen-hältige organische Gruppe mit 1 bis 10 Kohlenstoffatomen umfasst; der Index e eine ganze Zahl von 2 oder mehr ist, der Index f eine ganze Zahl von 0 oder mehr ist, der Index g eine ganze Zahl von 0 oder mehr ist, der Index h eine ganze Zahl von 0 oder mehr ist und Folgendes gilt: 2 ≤ e+f+g+h ≤ 1.000,
(B) eine organische Verbindung der nachstehenden allgemeinen Formel (5) oder (6) in einer Menge, die einem Molverhältnis von 1 bis 3 in Bezug auf die Aminogruppen in Komponente (A) entspricht 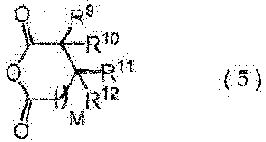 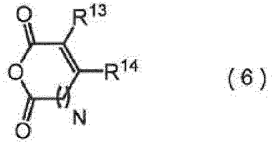 worin R⁹ bis R¹⁴, die gleich oder unterschiedlich sein können, Wasserstoffatome oder substituierte oder unsubstituierte einwertige Kohlenwasserstoffgruppen mit 1 bis 10 Kohlenstoffatomen sind und R⁹ oder R¹⁰ und R¹¹ oder R¹² oder R¹³ und R¹⁴ gegebenenfalls zu einem Ring verbunden sind und M und N ganze Zahlen von 0 bis 3 sind;
(C) einen Lewis-Säure-Katalysator in einer Menge, die einem Molverhältnis von 0,1 bis 2 in Bezug auf die Aminogruppen in Komponente (A) entspricht,
(D) ein Silylierungsmittel in einer Menge, die einem Molverhältnis von 1 bis 3 in Bezug auf die Aminogruppen in Komponente (A) entspricht,
(E) ein organisches Lösungsmittel in einer Menge von 0 bis 5.000 Gewichtsteilen pro 100 Gewichtsteile von Komponente (A),
wobei das Verfahren die folgenden Schritte umfasst:
(I) das Umsetzen von Komponente (A) mit Komponente (B), gegebenenfalls in Gegenwart von Komponente (E), um ein Organopolysiloxan (F) mit der nachstehenden mittleren Zusammensetzungsformel (7) zu bilden 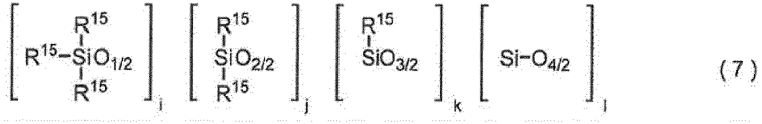 worin die Gruppierungen R¹⁵, die gleich oder unterschiedlich sein können, substituierte oder unsubstituierte einwertige Kohlenwasserstoffgruppen mit 1 bis 10 Kohlenstoffatomen oder organische Gruppen mit einer Struktur der nachstehenden Formel (8) oder (9) sind, wobei zumindest eine Gruppierung R¹⁵ eine organische Gruppe mit einer Struktur der nachstehenden Formel (8) oder (9) umfasst; der Index i eine ganze Zahl von 2 oder mehr ist, der Index j eine ganze Zahl von 0 oder mehr ist, der Index k eine ganze Zahl von 0 oder mehr ist, der Index I eine ganze Zahl von 0 oder mehr ist und Folgendes gilt: 2 ≤ i+j+k+l ≤ 1.000, 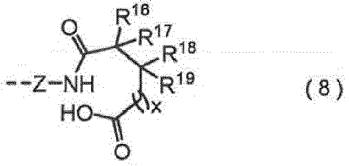 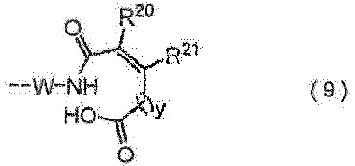 worin R¹⁶ bis R²¹, die gleich oder unterschiedlich sein können, Wasserstoffatome oder substituierte oder unsubstituierte einwertige Kohlenwasserstoffgruppen mit 1 bis 10 Kohlenstoffatomen sind und R¹⁶ oder R¹⁷ und R¹⁸ oder R¹⁹ oder R²⁰ und R²¹ gegebenenfalls zu einem Ring verbunden sind; die Indizes x und y ganze Zahlen von 0 bis 3 sind; Z und W substituierte oder unsubstituierte zweiwertige Kohlenwasserstoffgruppen mit 1 bis 10 Kohlenstoffatomen sind, die gegebenenfalls ein dazwischenliegendes Heteroatom aufweisen, und die gestrichelte Linie eine Stelle anzeigt, die für eine Bindung verfügbar ist;
(II) das anschließende Einmischen der Komponenten (C) und (D) und das Herbeiführen einer Kondensationsreaktion zwischen Amidgruppen und Carboxylgruppen in Komponente (F);
(III) das Neutralisieren des Ammoniaks durch Umsetzen mit einer sauren Substanz und das Abfiltrieren des resultierenden Salzes.

2. Organopolysiloxan-Herstellungsverfahren nach Anspruch 1, wobei in Formel (1) der Index a eine ganze Zahl von 2 bis 12 ist, der Index b eine ganze Zahl von 5 bis 500 ist, der Index c eine ganze Zahl von 0 bis 10 ist, der Index d eine ganze Zahl von 0 bis 5 ist und die Summe a+b+c+d = 7 bis 527 ist.

3. Organopolysiloxan-Herstellungsverfahren nach Anspruch 1 oder 2, wobei Komponente (A) ein Amin-Äquivalentgewicht von 200 bis 5.000 g/mol aufweist.

4. Organopolysiloxan-Herstellungsverfahren nach Anspruch 1, wobei (A) aus den folgenden Verbindungen ausgewählt ist, worin "Me" und "Ph" jeweils für Methyl- und Phenylgruppen stehen, die gestrichelte Linie eine Bindungsstelle anzeigt und "A" die angegebene Aminopropylgruppe oder eine andere Aminogruppen-hältige organische Gruppe mit 1 bis 10 Kohlenstoffatomen sein kann: 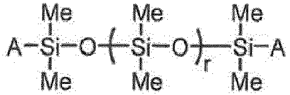 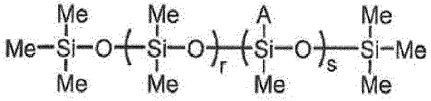 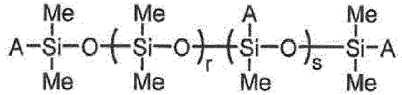 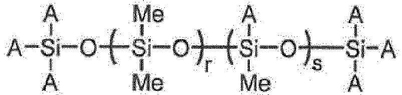 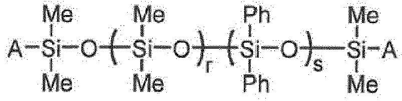 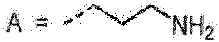 worin r ≥ 0 ist und s ≥ 1 ist, 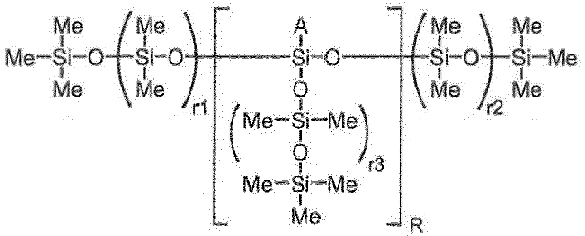 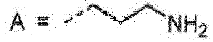 worin r1 ≥ 0 ist, r2 ≥ 0 ist, r3 ≥ 0 ist und R ≥ 1 ist.

5. Organopolysiloxan-Herstellungsverfahren nach einem der Ansprüche 1 bis 4, wobei Komponente (B) Bernsteinsäureanhydrid, Maleinsäureanhydrid, Glutarsäureanhydrid, Adipinsäureanhydrid, Pimelinsäureanhydrid oder Phthalsäureanhydrid ist.

6. Organopolysiloxan-Herstellungsverfahren nach einem der Ansprüche 1 bis 5, wobei Komponente (C) ein Lewis-Säure-Katalysator ist, der aus Borverbindungen, Aluminiumverbindungen, Scandiumverbindungen, Titanverbindungen, Vanadiumverbindungen, Eisenverbindungen, Kobaltverbindungen, Nickelverbindungen, Kupferverbindungen, Zinkverbindungen, Lanthanverbindungen und Cerverbindungen ausgewählt ist.

7. Organopolysiloxan-Herstellungsverfahren nach einem der Ansprüche 1 bis 6, wobei Komponente (C) eine Metallverbindung ist.

8. Organopolysiloxan-Herstellungsverfahren nach Anspruch 7, wobei Komponente (C) eine Zinkverbindung ist.

9. Organopolysiloxan-Herstellungsverfahren nach einem der Ansprüche 1 bis 8, wobei Komponente (C) in einer Menge eingesetzt wird, die einem Molverhältnis von 0,1 bis 2 in Bezug auf die Aminogruppen in Komponente (A) entspricht.

10. Organopolysiloxan-Herstellungsverfahren nach einem der Ansprüche 1 bis 9, wobei Komponente (D) eine Disilazanverbindung ist.

11. Organopolysiloxan-Herstellungsverfahren nach einem der Ansprüche 1 bis 10, wobei Komponente (D) in einer Menge eingesetzt wird, die einem Molverhältnis von 1 bis 3 in Bezug auf die Aminogruppen in Komponente (A) entspricht.

12. Organopolysiloxan-Herstellungsverfahren nach einem der Ansprüche 1 bis 11, wobei die saure Substanz, die zur Neutralisierung des Ammoniaks verwendet wird, Essigsäure oder Phosphorsäure ist.

## Revendications

1. Procédé pour préparer un organopolysiloxane qui répond à la formule de composition moyenne (1) ci-dessous et qui contient, par molécule, au moins un groupe organique ayant une structure de formule générale (2) ou (3) ci-dessous 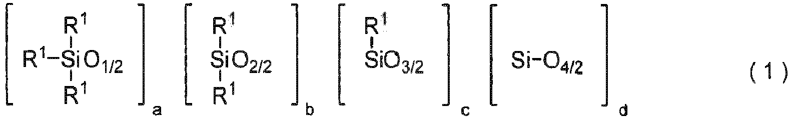 dans laquelle les fragments R¹, qui peuvent être identiques ou différents, sont des groupes hydrocarbonés monovalents substitués ou non substitués de 1 à 10 atomes de carbone ou des groupes organiques ayant une structure de formule générale (2) ou (3) ci-dessous, au moins un fragment R¹ contenant un groupe organique ayant une structure de formue générale (2) ou (3) ci-dessous ; l'indice a est un entier de 2 ou plus, l'indice b est un entier de 0 ou plus, l'indice c est un entier de 0 ou plus, l'indice d est un entier de 0 ou plus, et 2 ≤ a+b+c+d ≤ 1000 : 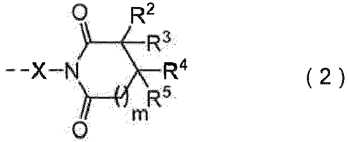 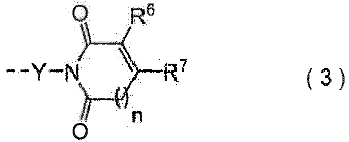 dans lesquelles R² à R⁷, qui peuvent être mutuellement identiques ou différents, sont des atomes d'hydrogène ou des groupes hydrocarbonés monovalents substitués ou non substitués de 1 à 10 atomes de carbone, et R² ou R³ et R⁴ ou R⁵, ou R⁶ et R⁷, peuvent être liés ensemble pour former un cycle ; les indices m et n sont des entiers de 0 à 3 ; X et Y sont des groupes hydrocarbonés divalents substitués ou non substitués de 1 à 10 atomes de carbone qui peuvent porter un hétéroatome intervenant ; et la ligne de tirets représente un site de liaison,
le procédé utilisant :
(A) 100 parties en poids d'organopolysiloxane qui répond à la formule de composition moyenne (4) ci-dessous et qui contient, par molécule, au moins un groupe organique contenant un groupe amino de 1 à 10 atomes de carbone 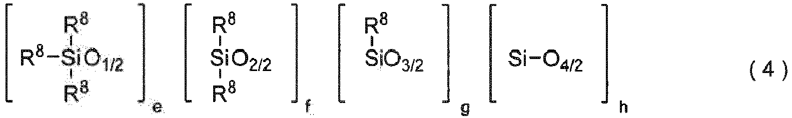 dans laquelle les fragments R⁸, qui peuvent être identiques ou différents, sont des groupes hydrocarbonés monovalents substitués ou non substitués de 1 à 10 atomes de carbone ou des groupes organiques contenant un groupe amino de 1 à 10 atomes de carbone, au moins un fragment R⁸ contenant un groupe organique contenant un groupe amino de 1 à 10 atomes de carbone ; l'indice e est un entier de 2 ou plus, l'indice f est un entier de 0 ou plus, l'indice g est un entier de 0 ou plus, l'indice h est un entier de 0 ou plus, et 2 ≤ e+f+g+g ≤ 1000,
(B) un composé organique de formule générale (5) ou (6) ci-dessous, en une quantité correspondant à un rapport molaire de 1 à 3 par rapport aux groupes amino dans le composant (A) 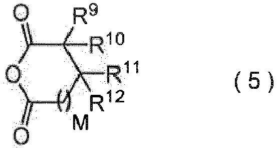 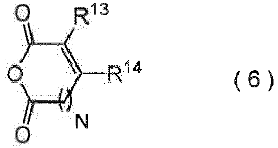 dans lesquelles R⁹ à R¹⁴, qui peuvent être mutuellement identiques ou différents, sont des atomes d'hydrogène ou des groupes hydrocarbonés monovalents substitués ou non substitués de 1 à 10 atomes de carbone, et R⁹ ou R¹⁰ et R¹¹ ou R¹², ou R¹³ et R¹⁴, peuvent être liés ensemble pour former un cycle ; et M et N sont des entiers de 0 à 3,
(C) un catalyseur acide de Lewis, en une quantité correspondant à un rapport molaire de 0,1 à 2 par rapport aux groupes amino dans le composant (A),
(D) un agent de silylation, en une quantité correspondant à un rapport molaire de 1 à 3 par rapport aux groupes amino dans le composant (A), et
(E) un solvant organique, en une quantité de 0 à 5000 parties en poids pour 100 parties en poids de composant (A),
lequel procédé comprend les étapes suivantes :
(I) réaction du composant (A) avec le composant (B), éventuellement en présence du composant (E), pour former un organopolysiloxane (F) répondant à la formule de composition moyenne (7) ci-dessous 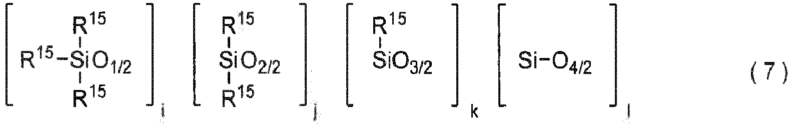 dans laquelle les fragments R¹⁵, qui peuvent être identiques ou différents, sont des groupes hydrocarbonés monovalents substitués ou non substitués de 1 à 10 atomes de carbone ou des groupes organiques ayant une structure de formule générale (8) ou (9) ci-dessous, au moins un fragment R¹⁵ contenant un groupe organique ayant une structure de formule générale (8) ou (9) ci-dessous ; l'indice i est un entier de 2 ou plus, l'indice j est un entier de 0 ou plus, l'indice k est un entier de 0 ou plus, l'indice I est un entier de 0 ou plus, et 2 ≤ i+j+k+l ≤ 1000 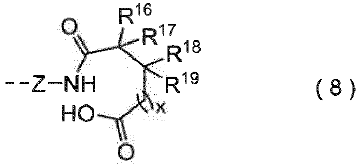 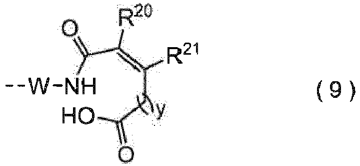 dans lesquelles R¹⁶ à R²¹, qui peuvent être mutuellement identiques ou différents, sont des atomes d'hydrogène ou des groupes hydrocarbonés monovalents substitués ou non substitués de 1 à 10 atomes de carbone, et R¹⁶ ou R¹⁷ et R¹⁸ ou R¹⁹, ou R²⁰ et R²¹, peuvent être liés ensemble pour former un cycle ; les indices x et y sont des entiers de 0 à 3 ; Z et W sont des groupes hydrocarbonés divalents substitués ou non substitués de 1 à 10 atomes de carbone qui peuvent porter un hétéroatome intervenant ; et la ligne de tirets représente un site disponible pour une liaison ;
(II) ensuite mélange dans les composants (C) et (D) et mise en œuvre d'une réaction de condensation entre les groupes amide et les groupes carboxyle dans le composant (F) ;
(III) neutralisation de l'ammoniac par neutralisation de celui-ci avec une substance acide, et retrait par filtration du sel résultant.

2. Procédé de préparation d'organopolysiloxane selon la revendication 1, dans lequel, dans la formule (1), l'indice a est un entier de 2 à 12, l'indice b est un entier de 5 à 500, l'indice c est un entier de 0 à 10, l'indice d est un entier de 0 à 5, et la somme a+b+c+d vaut de 7 à 527.

3. Procédé de préparation d'organopolysiloxane selon la revendication 1 ou 2, dans lequel le composant (A) a un poids équivalent d'amine de 200 à 5000 g/mol.

4. Procédé de préparation d'organopolysiloxane selon la revendication 1, dans lequel (A) est choisi parmi les composés suivants, où "Me" et "Ph" respectivement désignent les groupes méthyle et phényle, la ligne de tirets indique un site de liaison, et "A" peut être le groupe aminopropyle indiqué, ou peut être un autre groupe organique contenant un groupe amino de 1 à 10 atomes de carbone : 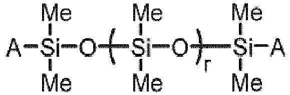 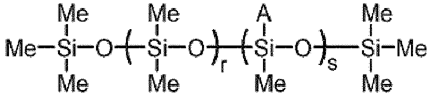 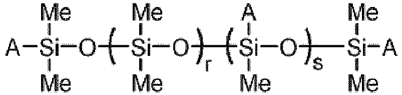 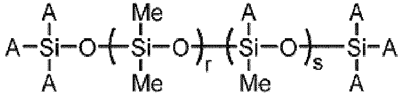 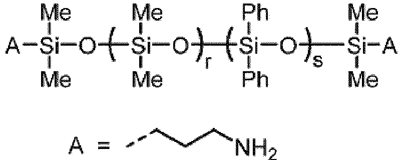 où r≥ 0, s ≥ 1 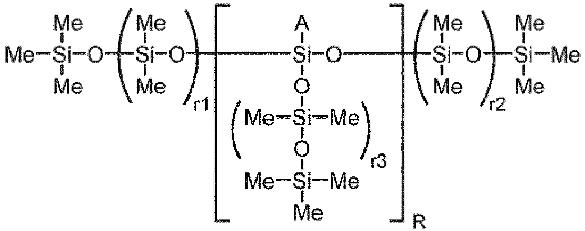 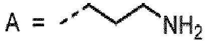 où r1 ≥ 0, r2 ≥ 0, r3 ≥ 0, R ≥ 1.

5. Procédé de préparation d'organopolysiloxane selon l'une quelconque des revendications 1 à 4, dans lequel le composant (B) est l'anhydride succinique, l'anhydride maléique, l'anhydride glutarique, l'anhydride adipique, l'anhydride pimélique ou l'anhydride phtalique.

6. Procédé de préparation d'organopolysiloxane selon l'une quelconque des revendications 1 à 5, dans lequel le composant (C) est un catalyseur acide de Lewis choisi parmi les composés du bore, les composés de l'aluminium, les composés du scandium, les composés du titane, les composés du vanadium, les composés du fer, les composés du cobalt, les composés du nickel, les composés du cuivre, les composés du zinc, les composés du lanthane et les composés du cérium.

7. Procédé de préparation d'organopolysiloxane selon l'une quelconque des revendications 1 à 6, dans lequel le composant (C) est un composé métallique.

8. Procédé de préparation d'organopolysiloxane selon la revendication 7, dans lequel le composant (C) est un composé du zinc.

9. Procédé de préparation d'organopolysiloxane selon l'une quelconque des revendications 1 à 8, dans lequel le composant (C) est utilisé en une quantité correspondant à un rapport molaire de 0,1 à 2 par rapport aux groupes amino dans le composant (A).

10. Procédé de préparation d'organopolysiloxane selon l'une quelconque des revendications 1 à 9, dans lequel le composant (D) est un composé disilazane.

11. Procédé de préparation d'organopolysiloxane selon l'une quelconque des revendications 1 à 10, dans lequel le composant (D) est utilisé en une quantité correspondant à un rapport molaire de 1 à 3 par rapport aux groupes amino dans le composant (A).

12. Procédé de préparation d'organopolysiloxane selon l'une quelconque des revendications 1 à 11, dans lequel la substance acide utilisée pour neutraliser l'ammoniac est l'acide acétique ou l'acide phosphorique.
